## Europäisches Patentamt
## European Patent Office
## Office européen des brevets

(19)

(11) Veröffentlichungsnummer: **0 048 854**
**A1**

(12) **EUROPÄISCHE PATENTANMELDUNG**

(21) Anmeldenummer: **81107143.0**

(22) Anmeldetag: **10.09.81**

(51) Int. Cl.³: **H 04 Q 7/04**

(30) Priorität: **29.09.80 DE 3036739**

(43) Veröffentlichungstag der Anmeldung: **07.04.82**
**Patentblatt 82/14**

(84) Benannte Vertragsstaaten: **BE FR GB IT NL SE**

(71) Anmelder: **SIEMENS AKTIENGESELLSCHAFT Berlin und München, Postfach 22 02 61, D-8000 München 22 (DE)**

(72) Erfinder: **Vollmeyer, Werner, Dr., Wertheimer Strasse 112, D-8000 München 60 (DE)**

(54) **Fernsprech-Mobilfunksystem zur digitalen Sprachübertragung.**

(57) In einem Fernsprech-Mobilfunksystem zur digitalen Sprachübertragung, bei dem jeder mobile Fernsprechteilnehmer über zumindest eine Funkverbindung mit einem ortsgebundenen Funkkonzentrator verbindbar ist, werden jeweils sogenannte virtuelle Verbindungen aufgebaut, die dazu benutzt werden, bei Bedarf kurzzeitig reale Verbindungen für zusammenhängende Sprachabschnitte (Phrasen) durchzuschalten.

EP 0 048 854 A1

SIEMENS AKTIENGESELLSCHAFT
Berlin und München

0048854

Unser Zeichen

VPA

80 P 7 1 5 8 E

Fernsprech-Mobilfunksystem zur digitalen Sprachübertragung

Die vorliegende Erfindung betrifft ein Fernsprech-Mobilfunksystem zur digitalen Sprachübertragung, bei dem jeweils jeder mobile Teilnehmer über zumindest eine Funkverbindung mit einem ortsgebundenen Funkkonzentrator verbindbar ist.

Die Übertragung von digitalisierten Sprachsignalen in Fernsprechnetzen gewinnt sowohl wegen der damit verbundenen Vorteile für die Vermittlungstechnik als auch für die Übertragungstechnik an sich zunehmend an Bedeutung.

In bisher bekannten Fernsprech-Mobilfunksystemen werden unter der Voraussetzung eines echten Gegensprechbetriebes in aller Regel für jede Verbindung jeweils zwei Kanäle, nämlich ein Hin- und ein Rückkanal benötigt. Mit zunehmender Verdichtung solcher betreffenden Netze bzw. mit zunehmender Teilnehmerzahl wachsen die Schwierigkeiten bezüglich der Anzahl der verfügbaren Kanäle.

Es ist bekannt, daß eine Sprechverbindung für ein einzelnes Gespräch in aller Regel über die Zeit nur zu einem geringen Teil ausgenutzt wird, da zum einen die Gesprächspartner meist jeweils abwechselnd sprechen und zum anderen auch der Redefluß des einzelnen Partners nicht kontinuierlich verläuft. Es entstehen jeweils auch in einem Kurzmonolog Sprechpausen, während derer die betreffende Sprechverbindung tatsächlich nicht benötigt würde. Dieser Umstand wird bekanntlich durch Verfahren zur Einsparung von Kanalkapazität, insbesondere in kostenintensiven Verbindungsabschnitten, beispielsweise Transatlan-

Pap 1 Reu / 22.9.1980

80 P 7 1 5 8 E

tikkabeln, Satellitenstrecken o. ä., vorteilhaft ausgenutzt. Ein diesbezüglich bekanntes und bewährtes Verfahren stellt das TASI (time assigned speech interpolation)-Verfahren dar.

Bei der Sprachinterpolation, die bei diesem bekannten TASI-Verfahren vorgenommen wird, wird jeweils ein Kanal für eine betreffende Sprechverbindung durchgeschaltet, wenn in der jeweils betreffenden Richtung tatsächlich gesprochen wird. In allen anderen Zeitabschnitten steht die Kanalkapazität weiteren individuellen Sprechverbindungen zur Verfügung. Es ist ohne weiteres erkennbar, daß mittels eines solchen Verfahrens der Umstand, nach dem eine herkömmliche Sprechverbindung nach den erläuterten Gegebenheiten während eines Gespräches nur zeitabschnittsweise benötigt wird, vorteilhaft für eine bessere Ausnutzung der Kanäle verwendet werden kann. Mit der Sprachinterpolation kann die vorhandene Übertragungskapazität eines Leitungsbündels sehr viel besser ausgenutzt werden. Es ist z. B. möglich, ein Bündel von 35 oder mehr Leitungen mit etwa doppelt so vielen Gesprächen, als herkömmlicherweise möglich ist, zu belasten.

Bei den jeweils zeitabschnittsweise für eine kurze Sprechphase durchgeschalteten Wegen wird von sogenannten virtuellen Verbindungen gesprochen. Eine Sprachinterpolation erfordert eine kurzzeitige Zwischenspeicherung von jeweils gebildeten, sogenannte Sprachphasen oder Phrasen repräsentierende, digitalen Signalen. Es ist daher darauf zu achten, daß die Laufzeitobergrenze von Teilnehmer zu Teilnehmer, die mit 400 ms festgelegt ist, nicht überschritten wird. Zieht man in Betracht, daß ein Satellitenabschnitt bereits ca. 300 ms Laufzeit beansprucht, so verbleiben für die restlichen Abschnitte nur noch ca. 100 ms Zeit. Dieser Umstand ist insbesondere für weltweite Sprechverbindungen von besonderer Bedeutung.

0048854

Die bekannten Verfahren der Sprachinterpolation werden grundsätzlich abschnittsweise, beispielsweise zwischen zwei Vermittlungsstellen eingesetzt. Jede der beiden Vermittlungsstellen hat dabei ein Bündel von gehenden Kanälen zur Verfügung, aus dem sie die Kanäle den Nachrichtensendern nach Bedarf zuteilt. In einem Mobilfunksystem liegt dagegen ein sternförmiges Netz vor. Nur an einem Abschnittsende beginnen bzw. enden alle Kanäle an einem Ort. Wenn die mobilen Teilnehmer am anderen Abschnittsende auch jeweils alle Zugriff zu allen kommenden und gehenden Kanälen haben, so befinden sie sich dennoch nicht aufgrund ihrer Mobilität an einem allen gemeinsamen Ort. In einem Mobilfunksystem wäre es unter Anwendung der Sprachinterpolation demnach erforderlich, die Zuteilung aller Kanäle an dem zentralen Abschnittsende vorzunehmen, und zwar sowohl für die beim mobilen Teilnehmer kommenden als auch für die beim mobilen Teilnehmer gehenden Kanäle. Die Anforderungen dieser Kanäle müssen in einem solchen Fall über einen zentralen Steuerkreis übertragen werden.

Der vorliegenden Erfindung liegt die Aufgabe zugrunde, ein Fernsprech-Mobilfunksystem zu schaffen, bei dem die Sprache in Form digitaler Signale übertragen wird und eine Sprachinterpolation vorgenommen werden kann, bei welchem System jeweils jeder mobile Teilnehmer über zumindest eine Funkverbindung mit einem ortsgebundenen Funkkonzentrator verbindbar ist.

Die der Erfindung zugrundeliegende Aufgabe wird durch ein Fernsprech-Mobilfunksystem gemäß dem Oberbegriff des Patentanspruchs 1 gelöst. Dieses erfindungsgemäße Fernsprech-Mobilfunksystem ist durch die im kennzeichnenden Teil des Patentanspruchs 1 angegebenen Merkmale gekennzeichnet.

Das erfindungsgemäße Fernsprech-Mobilfunksystem bietet

0048854

den Vorteil, daß die zur Verfügung stehenden Kanäle besser ausgenutzt werden können und damit die Teilnehmerzahl gegenüber bekannten Systemen beträchtlich gesteigert werden kann.

Vorteilhafte Weiterbildungen der vorliegenden Erfindung sind durch die in den Unteransprüchen angegebenen Merkmale gekennzeichnet.

Im folgenden wird das Fernsprech-Mobilfunksystem gemäß der vorliegenden Erfindung anhand mehrerer, Ausführungsbeispiele für die Erfindung betreffender Figuren im einzelnen beschrieben.

Fig. 1 zeigt verschiedene Verbindungs-Aufbaumöglichkeiten für eine Sprechverbindung zwischen zwei mobilen Fernsprechteilnehmern, die jeweils über Funkverbindungen an einen Funkkonzentrator angeschlossen sind.

Fig. 2 zeigt eine Verbindungs-Aufbaumöglichkeit für eine Sprechverbindung zwischen einem ortsfesten Teilnehmer und einem an einen über Funkverbindungen an einen Funkkonzentrator angeschlossenen mobilen Teilnehmer.

Fig. 3 zeigt schematisch den Aufbau einer ersten Aufbaudatenfolge D'.

Fig. 4 zeigt schematisch den Aufbau einer zweiten Aufbaudatenfolge D''.

Fig. 5 zeigt schematisch den Aufbau einer Sprachinformation S mit einzelnen Phrasen P mit jeweils einer vorangestellten Zielkennungsfolge Z und einer anschließenden Endekennung E.

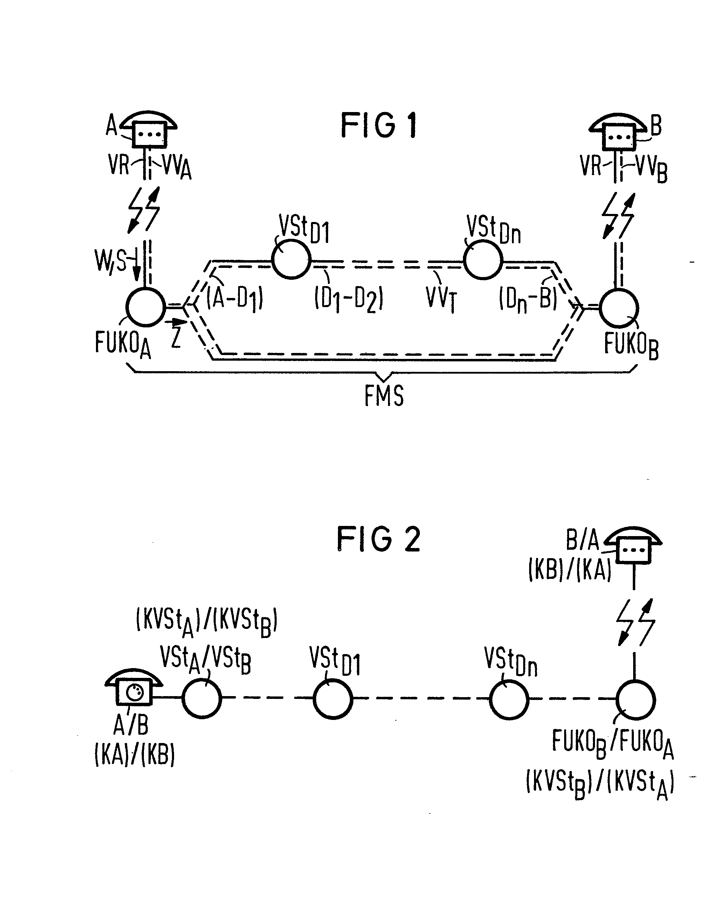

Wie bereits erläutert, zeigt Fig. 1 verschiedene Verbindungs-Aufbaumöglichkeiten für eine Sprechverbindung zwischen zwei mobilen Fernsprechteilnehmern. Dabei wird vorausgesetzt, daß die beiden Übertragungsrichtungen voneinander völlig unabhängig geschaltet werden können. Diese Voraussetzung ist deswegen nötig, weil in einem Gespräch durchaus Zeitabschnitte vorkommen, in denen beide Gesprächspartner gleichzeitig sprechen. Dann müssen bei einem Teilnehmer auch Sender und Empfänger gleichzeitig eingeschaltet sein.

Es sei angenommen, daß der in einem Bereich zentral gelegenen festen Funkstelle, nämlich dem Funkkonzentrator $FUKO_A$ bzw. $FUKO_B$, 60 Kanäle in Richtung zu den mobilen Teilnehmern für die Sprachübertragung zur Verfügung stehen. Ebenso sei angenommen, daß ebenfalls 60 Kanäle in umgekehrter Richtung sowie je ein Steuerkanal in den beiden Richtungen zur Verfügung stehen. Jeder Kanal soll beispielsweise eine Übertragungsgeschwindigkeit von 16 kbit/s aufweisen. Der betreffende Funkkonzentrator kann dann 120 virtuelle Verbindungen annehmen. Jeder weitere Verbindungswunsch wird durch ein Besetztzeichen abgewiesen.

Die Sprachübertragung in Richtung zum mobilen Teilnehmer steuert der Funkkonzentrator über einen speziellen Steuerkanal in Richtung zu den mobilen Teilnehmern, der nicht identisch mit einem Organisationskanal ist, der dem Verbindungsauf- und -abbau dient.

Beim Aufbau einer Verbindung über den Organisationskanal ordnet der betreffende Funkkonzentrator der Verbindung eine Nummer zu, die nur für die Dauer der Verbindung und nur für diesen Funkkonzentrator gilt. Da der Funkkonzentrator je Steuerkreis nur 120 Verbindungen annehmen kann, sind dazu 7 bit ausreichend. Zusammen mit 1 bit für eine Paritätssicherung ergibt sich gerade 1 Oktett.

Die 60 Kanäle des Funkkonzentrators sind ebenfalls numeriert. Mit einem Bit ist zu kennzeichnen, welche Richtung der Kanal hat. Hier wird angenommen, daß für diejenigen Kanäle in Richtung zum Teilnehmer an der ersten Stelle eines Oktett der Binärwert 1 verwendet wird. Für die Kennzeichnung der 60 Kanäle sind 6 bit ausreichend. Das achte Bit des Oktett dient der Paritätssicherung.

Der Funkkonzentrator ist also in der Lage, mit zwei Oktetts im Steuerkanal in Richtung zum Mobilteilnehmer jeder der maximal 120 Verbindungen einen der 2 x 60 Kanäle zuzuordnen.

Wenn der Funkkonzentrator nun aus dem Fernsprech-Landnetz während eines Gesprächs zu einem mobilen Teilnehmer Sprache zu übermitteln hat, vergl. Fig. 2, so unterteilt er die Sprache mit einem Sprachdetektor in Phrasen. (Eine Phrase ist ein zusammenhängender Sprachabschnitt). Jede Phrase wird 15 ms zwischengespeichert, um am Anfang einer Phrase feststellen zu können, ob es sich wirklich um Sprache oder nur um einen kurzen Störknack handelt. Diese Zeit wird benutzt, um der betreffenden Empfangseinrichtung beim Teilnehmer über den Steuerkanal mitzuteilen, daß eine neue Phrase übermittelt werden wird und über welchen Kanal dies geschehen soll. In diesem Fall übermittelt der Funkkonzentrator, im folgenden jeweils kurz "FUKO" genannt, zuerst die Nummer der Verbindung und mit dem nächsten Oktett die Kanalnummer. Der Empfänger des Mobilteilnehmers stellt sich nach Empfang der zwei Steuer-Oktetts innerhalb von etwa 3 ms auf den genannten Kanal ein und empfängt die Phrase, die 15 ms nach Eintreffen beim FUKO weitergesendet wird.

In den Sprechkanälen werden im Ruhezustand Oktetts der Form 11111111 übertragen. Der Beginn einer Phrase wird durch ein Oktett der Form 00000000 angezeigt. Empfängt der Empfänger die Kombination 00000000, so decodiert er das folgende Oktett als Sprache.

Auf das Phrasenbeginn-Oktett 00000000 kann gemäß einer
vorteilhaften Weiterbildung der Erfindung verzichtet werden, wenn sichergestellt wird, daß das erste Oktett, das
Sprache darstellt, von Oktetts der Formen 11111111,
01101000 und 01111110 verschieden ist oder vom Sender
verschieden gemacht wird und der Empfänger dies auswertet. Diese Oktetts stellen jeweils systemintern vergebene Kennzeichen dar.

Es ist wichtig, daß die Durchlaufzeit der Sprache durch
den FUKO immer gleich ist. Während der Zwischenspeicherzeit sucht der FUKO für die aktuelle beginnende Phrase
einen freien Kanal. In der Regel wird dieser Suchvorgang
zur Zuteilung eines Kanals führen. Nach Ablauf der Zwischenspeicherzeit ist der Empfänger beim Mobilteilnehmer
auf diesen Kanal eingestellt und kann die Phrase empfangen. Ist jedoch zufällig kein Kanal frei, so darf die
Phrase nicht zusätzlich verzögert werden. Vielmehr werden am Anfang der Phrase so viele Oktetts unterdrückt,
wie der Dauer entspricht, in der die Phrase auf einen
freien Kanal warten muß.

Wenn der Sprachdetektor beim FUKO anzeigt, daß die Phrase beendet ist, werden 16 Oktetts der Form 11111111 ausgesendet. Sollte das analoge Sprachsignal während einer
Phrase die Aussendung von 16 Oktetts der Form 11111111
erfordern, wodurch ein Phrasenende vorgetäuscht würde,
so kann festgelegt werden, daß der FUKO beim sechzehnten
Oktett das Bit mit der geringsten Wertigkeit von 1 auf 0
verändert. Es besteht jedoch nur eine geringe Wahrscheinlichkeit, daß das analoge Sprachsignal die Aussendung
von 16 Oktetts der Form 11111111 erfordert, weshalb man
auf diese Maßnahme vorteilhafterweise verzichten kann.

Wie im folgenden erläutert werden wird, muß der Empfän-

0048854

ger der mobilen Station nicht nur prüfen, ob 16 Oktetts der Form 11111111 eintreffen, um davon abzuleiten, daß die Phrase beendet ist. Er muß vielmehr außerdem prüfen, ob das darauf folgende Oktett nicht die Form 01101000 hat.

Nach Beendigung der Phrase stellt sich der Funkempfänger wieder auf den Steuerkanal ein.

Im Steuerkanal in Richtung zu den Mobilteilnehmern werden im Ruhezustand Synchronisierzeichen übermittelt, z. B. Oktetts der Form 01101000. Diese Kombination wird weder bei der Numerierung der virtuellen Verbindung noch bei der Numerierung der Kanäle verwendet. Die Steuerempfänger aller mobilen Teilnehmer synchronisieren die Mobilteilnehmerstationen auf diesen Takt. Zur Trennung zweier aufeinanderfolgender Phrasenbeginnblöcke wird jeweils mindestens 1 Oktett der Form 01101000 eingefügt.

Wenn angenommen wird, daß 120 Verbindungen aufgebaut worden sind und dabei in jeder Richtung im Mittel eine Phrase und eine Pause mit einem Zeitbedarf von jeweils 2 s übertragen werden müssen, ist der Steuerkanal durch die Phrasen in Richtung zu den Mobilteilnehmern mit

$$\frac{120}{2\,[s]} \cdot \frac{3 \cdot 8\,[bit]}{16\,000\,[bit/s]} = 0.09\,[Erl]$$

belegt.

Bei der Sprachübertragung von Mobilteilnehmern zum FUKO wird ähnlich wie in der Gegenrichtung verfahren. Lediglich die Sprechkanäle werden nicht auf der Sendeseite, sondern von der Empfangsseite, nämlich vom FUKO aus, zugeteilt. Bei Beginn einer Phrase P muß die Teilnehmerstation die Zuteilung eines Kanals in Richtung zum FUKO anfordern. Dazu sendet sie - nach Einschalten des Senders - 3 Oktetts auf dem Steuerkanal zum FUKO, nämlich 2 Oktetts der Form 01101000, sowie die Verbindungsnummer. Anschließend gibt sie den Steuerkanal wieder frei, indem sie den Sender wieder ausschaltet. Der FUKO teilt der Gegenrichtung über den Steuerkanal einen Sprechkanal zu, indem er zunächst ein Oktett zur Kennzeichnung der Verbindung und dann ein Oktett zur Kennzeichnung des zugeteilten Kanals aussendet. Bei der Kanalkennzeichnung ist das Bit der ersten Stelle des Oktett auf 0 gesetzt, um anzuzeigen, daß es sich um einen Kanal der Richtung vom Teilnehmer zum FUKO handelt.

Die Mobilteilnehmerstation stellt nun innerhalb von 3 ms ihren Sender auf den zugeteilten Sprechkanal ein, schaltet den Sender ein, sendet zwei Oktetts der Form 01101000, sodann ein Oktett der Form 00000000 und danach das die Sprache repräsentierende Signal. Unter der Voraussetzung, daß die Verarbeitungszeit eines dafür vorgesehenen Zuteilungsrechners im FUKO 5 ms beträgt, kann der Kanal - auch unter Berücksichtigung der Laufzeiten - innerhalb von 15 ms zur Verfügung stehen.

Zur Beendigung der Phrase sendet die Mobilteilnehmerstation 16 Oktetts der Form 11111111 aus und gibt dann den zugeteilten Sprechkanal wieder frei, indem sie den Sender ausschaltet und vorsorglich wieder auf den Steuerkanal einstellt.

Der Steuerkanal zum FUKO ist unter denselben Bedingungen wie denen, die für die Sprachübertragung in Richtung zu dem mobilen Teilnehmer gelten, durch die Phrasen in Richtung zum FUKO ebenfalls mit ca. 0,1 Erl belegt. Es ist jedoch zu bemerken, daß die Steuerinformation von den Mobilteilnehmern unkorreliert angeboten werden und daher zeitliche Kollisionen nicht zu vermeiden sind, obwohl die Verkehrsbelastung des Steuerkanals nicht groß ist. Um diesem Problem zu begegnen, sind zwei wirksame Maßnahmen durchführbar:

0048854
80 P 7153.E

a. Für den Steuerkanal sollten beim FUKO mindestens vier Sektorempfangsantennen mit vier nachgeschalteten Empfängern verwendet werden. Auf diese Weise können auch gleichzeitig eintreffende Signale aus verschiedenen Richtungen selektiert werden. Andererseits ist durch ein Programm sicherzustellen, daß Signale, die von zwei Empfängern aufgenommen wurden, keine Doppelbelegung verursachen.

b. Ein Mobilteilnehmer, dessen Kanalanforderung "überhört" wurde, erkennt dies nach 15 ms, weil er bis zu diesem Zeitpunkt vom FUKO keinen Kanal angeboten bekommt. Er wiederholt daher seine Anforderung und verkürzt den Phrasenanfang, wie zuvor für den Vorgang einer Sprachübertragung in Richtung zu dem mobilen Teilnehmer beschrieben wurde. Dabei sollte die Aussendung der wiederholten Aufforderung um 0, 1, 2 oder 3 Oktetts über die 15 ms hinaus verzögert werden, wobei die tatsächliche Verzögerungszeit stochastisch auszuwählen ist. Damit soll vermieden werden, daß zwei Mobilteilnehmer, die bei der ersten Anforderung gleichzeitig gesendet hatten, beim zweiten Mal ebenfalls gleichzeitig senden und sich so wiederum gegenseitig stören.

Der Steuerkanal in Richtung von dem FUKO zum Mobilteilnehmer ist zusätzlich auch mit den Steuersignalen für die Phrasen vom Mobilteilnehmer zum FUKO belegt. Unter denselben Bedingungen wie zuvor beschrieben, beträgt der Zusatzverkehrswert ca. 0.1 Erl, so daß dieser Steuerkanal insgesamt mit ca. 0.2 Erl belegt ist. Da der FUKO die Aussendung der Steuersignale für die beiden Richtungen koordinieren kann, ist diese Verkehrsbelastung nicht zu groß. Allerdings muß durch den FUKO dafür gesorgt werden, daß bei der Steuerung der Kanäle vom Mobilteilnehmer zum FUKO die genannten 15 ms Antwortzeit nicht überschritten werden. Anderenfalls muß bei dem Mobilteilnehmer der Eindruck entstehen, daß seine Anforderung "überhört" worden ist. Daher sollten die Steuersignale für diese Richtung bevorzugt werden.

Es kann zweckmäßig sein, die Steuersignale nicht nur mit einer Quer-Paritätssicherung zu schützen. Vorzugsweise wird zusätzlich die Längs-Parität gesichert, wozu jeweils ein Oktett zusätzlich zu übertragen ist. Die Verkehrsangaben für die Steuerkanäle erhöhen sich dann um 33 % (von 0.09 auf 0.12 Erl und von 0.18 auf 0.24 Erl). Mit gleichem Aufwand an Redundanz läßt sich auch ein sogenanntes Vorwärtskorrekturverfahren anwenden.

Wie bereits erläutert, kommt es vor, daß ein Gesprächspartner dem anderen ins Wort fällt. Bei dem hier geschilderten Sprachinterpolationsverfahren bringt nur einer von den beiden möglichen Fällen eine Schwierigkeit mit sich, nämlich der, bei dem ein mobiler Teilnehmer einem Teilnehmer, der ortsgebunden ist, ins Wort fällt. In einem solchen Fall kann zwar die mobile Station beim FUKO einen Kanal über den Steuerkanal anfordern, der FUKO kann aber den Kanal der mobilen Station nicht über den Steuerkanal zuteilen, weil der Empfänger der mobilen Station noch an den Sprechkanal angeschaltet ist. Daher unterbricht der FUKO für 10 ms den Sprechkanal und sendet 16 Oktetts der Form 11111111, dann zwei Oktetts der Form 01101000 sowie die Verbindungsnummer und die Sprechkanalnummer. Nach diesem üblichen Steuersignal wird die aktuelle Phrase P fortgesetzt. Das Ohr wird diese kurze Unterbrechung kaum wahrnehmen, zumal bereits in der Gegenrichtung gesprochen wird. Sollte die Phrase P inzwischen beendet worden sein, wird sie in jedem Fall nach dem Steuersignal mit 16 Oktetts der Form 11111111 abgeschlossen.

Bei dem im folgenden Beschriebenen wird davon ausgegangen, daß eine Funkvermittlungsstelle wie eine Knotenvermittlung an das Drahtnetz angeschlossen ist. Ihr sollten dabei die Funkkonzentratoren (FUKO) sternförmig über feste Leitungen zugeordnet sein. Die FUKO stehen mit den mobilen Stationen, wie zuvor beschrieben, in Verbindung. Unter diesen Voraussetzungen ist es gegenüber dem bisher Ausgeführten auch möglich, die Sprachdetektion und -umcodierung für die Landteilnehmer in die Funkvermittlungsstelle, im folgenden kurz FuVSt genannt, an den Übergang zum Drahtnetz des Systems zu verlegen und in der FuVSt sowie in den darunter liegenden Netzbereichen mit Sprachinterpolation und 16 kbit/s Übertragungsgeschwindigkeit zu arbeiten. Für die FuVSt arbeitet der Übergang zum Drahtnetz des Systems wie ein FUKO.

Wenn der Teilnehmer seinen Verbindungswunsch über den Organisationskanal dem FUKO mitgeteilt hat, meldet dieser die virtuelle Verbindung mit einem speziell gekennzeichneten gesicherten Verbindungsbeginn-Frame ("-Rahmen") der FuVSt. (Für die Kennzeichnung kann beispielsweise auch eine eigene Leitung, z. B. eine Organisationsleitung verwendet werden.) Dieser Beginn-Frame enthält die Kennungen für den gerufenen und für den rufenden Teilnehmer. Außerdem enthält er ein Oktett zur lokalen, d.h. nur im Ursprungs-FUKO verständlichen Kennzeichnung der Funk-Verbindung des rufenden Teilnehmers, nämlich des Ursprungsteilnehmers A.

Die FuVSt "merkt" sich den FUKO, aus dem der Beginn-Frame kam, liest die Nummer des gerufenen Teilnehmers, findet ihn in einer Aktivdatei, fügt dem Beginn-Frame zur lokalen Kennzeichnung des ankommenden und des abgehenden Bündels zu den beiden FUKO je ein Oktett, nämlich eine Leitungsbündelkennung, an und sendet den Beginn-Frame auf eine Leitung zum Ziel-FUKO.

Der FUKO des gerufenen Teilnehmers, nämlich des Zielteilnehmers B, empfängt schließlich den Beginn-Frame, der die Oktetts enthält, mit denen der Ursprungs-FUKO und die FuVSt die Verbindung in ihrem Bereich gekennzeichnet haben, sowie die Nummern des rufenden und des gerufenen Teilnehmers, nämlich eine Identifikationsinformation I und die Wählinformation W. Der FUKO des gerufenen Teilnehmers vergibt, wie zuvor beschrieben, eine Verbindungs-Kennzeichnung (1 Oktett), die nur in diesem FUKO verständlich ist, fügt diese dem Beginn-Frame an und sendet den Beginn-Frame zum FUKO des rufenden Teilnehmers als Quittung gekennzeichnet zurück. Beginn-Frame und Quittungs-Frame haben nun die FuVSt durchlaufen. Mit Hilfe der Teilnehmernummer können dort diese beiden Frames identifiziert werden, und die Information des Quittungs-Frames kann abgespeichert werden. Die FuVSt kann somit die virtuelle Verbindung überwachen.

Mit der Annahme des Rufes durch den gerufenen Teilnehmer ("Abheben") beginnt der Gesprächszustand, was dem rufenden Teilnehmer gemeldet wird.

Zwischen dem FUKO und der FuVSt brauchen nur soviele Kanäle vorhanden zu sein, wie dem FUKO Kanäle von und zu den mobilen Teilnehmern zur Verfügung stehen (Organisations- und Steuerkanäle eingeschlossen).

Wenn die mobile Teilnehmerstation, die den Sprachfluß mittels eines Sprachdetektors in Phrasen P unterteilt und das codierte Sprachsignal für 15 ms zwischenspeichert, bei dem betreffenden FUKO einen Sprechkanal für eine Phrase P anfordert, so teilt der FUKO nicht nur dem Mobilteilnehmer einen Sprechkanal zu, sondern sucht auch einen Sprechkanal zur FuVSt aus und sendet eine Zielkennungsfolge Z über den Steuerkanal dorthin. Die Zielkennungsfolge Z besteht aus dem Kennzeichen des Sprechkanals, den der FUKO ausgesucht hat, aus einem Oktett, das den Ziel-FUKO, nämlich den $FUKO_B$, kennzeichnet, sowie aus der Verbindungskennzeichnung, nämlich der Kennzeichnung der virtuellen Verbindung zum mobilen Teilnehmer, die der Ziel-FUKO vergeben hat. Die beiden letzten Kennzeichnungen sind dem Ursprungs-FUKO, nämlich dem $FUKO_A$, aus dem Quittungs-Frame bekannt. Der Ursprungs-FUKO sendet die drei Oktetts der Zielkennungsfolge Z in der hier angegebenen Reihenfolge zur FuVSt. Die FuVSt liest aus der Zielkennungsfolge Z das erste und das zweite Oktett, ordnet dem (durch das erste Oktett bezeichneten) Sprechkanal vom Ursprungs-FUKO einen Sprechkanal zum durch das zweite Oktett bezeichneten Ziel-FUKO zu und sendet eine weitere Zielkennungsfolge über den Steuerkanal zum Ziel-FUKO. Diese weitere Zielkennungsfolge besteht aus zwei Oktetts. Das erste davon gibt den Sprechkanal an, auf dem die Phrase P von der FuVSt zum Ziel-FUKO übertragen werden soll. Das zweite Oktett der weiteren Zielkennungsfolge ist das dritte Oktett aus der zuerst genannten Zielkennungsfolge Z.

In den Steuerkanälen werden im Ruhezustand Oktetts der Kombination 01101000 (Synchronisierzeichen) übermittelt. Diese Kombination wird daher zur Kennzeichnung von Kanälen oder virtuellen Verbindungen nicht verwendet. Wichtig ist, daß zur Trennung zweier aufeinanderfolgender Zielkriterien mindestens ein Oktett der Form 01101000 eingefügt wird.

Der Ziel-FUKO liest seinerseits die beiden Oktetts der Zielkennungsfolge, teilt der (durch das zweite Oktett bezeichneten) virtuellen Verbindung einen Funkkanal zum Mobilteilnehmer zu und ordnet diesen dem durch das erste Oktett der weiteren Zielkennungsfolge bezeichneten Sprechkanal zu. Somit steht nach Ablauf der Zwischenspeicherzeit von 15 ms beim sprechenden Mobilteilnehmer eine durchgehende Verbindung vom sprechenden zum hörenden Mobilteilnehmer zur Verfügung.

Bei einer Übertragungsgeschwindigkeit von 16 kbit/s ergibt sich eine Aussendezeit für die Zielkennungsfolge

von $\leqq$ 2 ms. Die o. a. Zwischenspeicherzeit von 15 ms für die Phrase P entsteht nur einmal beim sprechenden Teilnehmer. Der FUKO und die FuVSt brauchen nur etwa 0,5 ms zwischenzuspeichern. Die Phrase P wird, wie weiter oben bereits erläutert, in den Sprechkanälen übertragen.

Die virtuelle Verbindung wird dadurch ausgelöst bzw. abgebaut, daß der FUKO des auslösenden mobilen Teilnehmers einen dem Beginn-Quittungs-Frame entsprechenden Auslöse-Frame aussendet, der die FuVSt durchläuft und von dem FUKO des anderen Teilnehmers empfangen und quittiert wird. Alle beteiligten Einrichtungen löschen nacheinander die entsprechenden Speicher-Einträge.

Zur Überwachung einer virtuellen Verbindung wird bei jedem Eintreffen einer neuen Phrase P in der FuVSt ein Zeitglied in seinen Zustand "Null" gesetzt. Läuft das Zeitglied ab, ohne daß eine Phrase P in einer der beiden Richtungen übertragen wird, wird die Verbindung ausgelöst, indem dem rufenden oder beiden Teilnehmern Auslöse-Frames gesendet werden.

Es wurde ein Verfahren für die Übermittlung von Sprache mit Sprachinterpolation in einem digitalen Netz derart beschrieben, daß der FUKO wie eine Unter-FuVSt wirkt. Der FUKO ist auf diese Weise auch in der Lage, zwei Mobilteilnehmer, die sich innerhalb seines Bereiches befinden, nach Rückfrage in der Aktivdatei ohne weitere Mitwirkung der FuVSt miteinander zu verbinden. Dieser Fall kann insbesondere bei einigen Teilnehmerklassen des "Nichtöffentlichen beweglichen Landfunks" NöbL von Interesse sein.

Bei dem sogenannten "Öffentlichen beweglichen Landfunk" ÖbL treten dagegen vor allem Verbindungen von Mobilteilnehmern zum Drahtnetz und umgekehrt auf. In diesem Falle kann es zweckmäßig sein, die Kanäle des Leitungsabschnit-

0048854
80 P 7158 IE

tes FUKO-FuVSt fest mit den Funkkanälen zwischen dem FUKO und den mobilen Teilnehmern zu verbinden. Der gesamte Verkehr kann dann zentral in der FuVSt gesteuert werden. Das hat den Vorteil, daß die FuVSt in einem Überlastfall kurzfristig auch Kanäle von einem Nachbar-FUKO anbieten kann.

Schließlich ist es möglich, beide Fälle zu kombinieren und den einen Teil der Kanäle auf die eine Weise und den anderen Teil auf die andere Weise zu betreiben, wobei allerdings zu beachten ist, daß kein Kanal-Kollektiv kleiner als 35 wird.

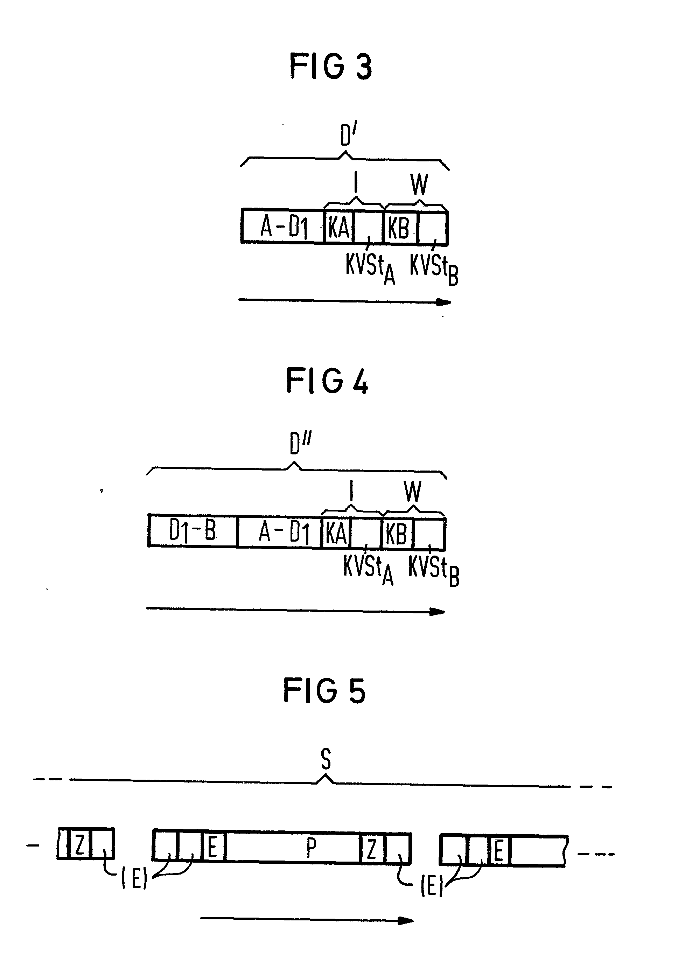

Fig. 3 und Fig. 4 zeigen, wie bereits erläutert, jeweils schematisch den Aufbau einer ersten bzw. einer zweiten Aufbaudatenfolge D' bzw. D''. Dabei ist mit W die Wählinformation bezeichnet, die die Zielvermittlungsstellen-Kennung $KVSt_B$ und die Zielteilnehmer-Kennung KB enthält. Mit I ist die Identifikationsinformation bezeichnet, die die Ursprungsvermittlungsstellen-Kennung $KVSt_A$ und die Ursprungsteilnehmer-Kennung KA enthält. Mit A - $D_1$ bzw. $D_1$ - B sind die Leitungsbündel-Kennungen bezeichnet.

Fig. 5 zeigt, wie ebenfalls bereits erläutert, schematisch den Aufbau einer Sprachinformation S, wobei mit Z die Zielkennungsfolge, mit P die Phrase und mit E eine Endekennung bezeichnet ist.

Die gegebene Beschreibung und die Figuren beziehen sich jeweils lediglich auf ein bevorzugtes Ausführungsbeispiel für die vorliegende Erfindung. Die Erfindung ist keinesfalls auf dieses gezeigte Ausführungsbeispiel beschränkt.

26 Patentansprüche
5 Figuren

Patentansprüche

1. Fernsprech-Mobilfunksystem zur digitalen Sprachübertragung, bei dem jeder mobile Fernsprechteilnehmer jeweils über zumindest eine Funkverbindung mit einem ortsgebundenen Funkkonzentrator verbindbar ist, d a -  d u r c h   g e k e n n z e i c h n e t ,  daß eine von einem mobilen Ursprungsteilnehmer (A) in das Fernsprech-Mobilfunksystem (FMS) eingegebene Verbindungsinitiierung dazu verwendet wird, eine virtuelle Ursprungsverbindung ($VV_A$) zwischen dem mobilen Ursprungsteilnehmer (A) und dem ihm aktuell zugeteilten Funkkonzentrator ($FUKO_A$) aufzubauen, daß eine von dem mobilen Ursprungsteilnehmer (A) in das Fernsprech-Mobilfunksystem (FMS) eingegebene Wählinformation (W) dazu verwendet wird, eine virtuelle Zielverbindung ($VV_B$) zwischen einem mobilen Zielteilnehmer (B) und einem ihm aktuell zugeteilten weiteren, gegebenenfalls auch demselben Funkkonzentrator ($FUKO_B$ oder $FUKO_A$) sowie gegebenenfalls virtuelle Teilverbindungen ($VV_T$) zwischen den beiden Funkkonzentratoren ($FUKO_A$, $FUKO_B$) aufzubauen, daß zu übertragende Sprachinformation (S) in Sprachabschnitte oder Phrasen (P) eingeteilt wird, daß eine Phrase (P) in Form eines Datenblocks mit einer vorangestellten Zielkennungsfolge (Z), die Angaben über jeweils gegebenenfalls zu durchlaufende virtuelle Teilverbindungen ($VV_T$) und die zu durchlaufende virtuelle Ursprungsverbindung ($VV_A$) und/oder die zu durchlaufende virtuelle Zielverbindung ($VV_B$) je nach Übertragungsrichtung für die Sprachinformation (S) enthält, und mit einer an das Ende der Phrase (P) gestellten und deren Ende signalisierenden Endekennung (E), über die jeweils zwischen dem mobilen Ursprungsteilnehmer (A) und dem mobilen Zielteilnehmer (B) für eine betreffende aktuelle Phrase (P) abschnittsweise aufgebauten realen Verbindungen (VR) übertragen wird, daß alle betreffenden realen Verbindungen nach Beendigung der Phrase abgebaut werden und daß alle betreffenden virtuellen Verbindungen ($VV_A$)

nach Beendigung des Gesprächs abgebaut werden.

2. Fernsprech-Mobilfunksystem nach Anspruch 1,  d a -
d u r c h   g e k e n n z e i c h n e t ,  daß jeweils
anstelle des mobilen Ursprungsteilnehmers (A) oder des
mobilen Zielteilnehmers (B) ein ortsgebundener Teilnehmer an einem Verbindungsaufbau beteiligt ist.

3. Fernsprech-Mobilfunksystem nach Anspruch 1,  d a -
d u r c h   g e k e n n z e i c h n e t ,  daß die virtuellen Teilverbindungen ($VV_T$) über ortsgebundene Durchgangsvermittlungsstellen ($VST_{D1}...VST_{Dn}$) verlaufen.

4. Fernsprech-Mobilfunksystem nach einem der vorhergehenden Ansprüche,  d a d u r c h   g e k e n n z e i c h -
n e t ,  daß zum Aufbauen der virtuellen Verbindung
($VV_A$ und/oder $VV_B$, ggf. $VV_T$) zunächst aufgrund einer dem
mobilen Ursprungsteilnehmer (A) fest zugeteilten Kennung
und aufgrund einer den dem mobilen Ursprungsteilnehmer
(A) aktuell zugeteilten Funkkonzentrator ($FUKO_A$) und/oder
den dem mobilen Zielteilnehmer (B) aktuell zugeteilten,
gegebenenfalls demselben Funkkonzentrator ($FUKO_B$ oder
$FUKO_A$) oder eine ortsgebundene Zielvermittlungsstelle
($VST_B$) bestimmenden Wählinformation (W), nämlich einer
Zielvermittlungsstellen-Kennung ($KVST_B$), in an sich bekannter Weise eine Leitwegsuche durchgeführt wird, bei
der Funkverbindungsbündel und/oder Leitungsbündel ausgewählt werden, über welche Funkverbindungsbündel und/oder
über welche Leitungsbündel der Ursprungspunkt der aufzubauenden Verbindung mit dem Zielpunkt verbindbar ist und
in welchen Funkverbindungsbündeln und/oder in welchen
Leitungsbündeln zum Zeitpunkt des Beginns der Leitwegsuche Sprachübertragungskapazität frei ist, daß der dem
mobilen Ursprungsteilnehmer (A) aktuell zugeteilte Funkkonzentrator ($FUKO_A$) oder eine Ursprungsvermittlungsstelle ($VST_A$) über eine freie Leitung des ausgesuchten
Leitungsbündels, das zu einer Durchgangsvermittlungsstelle ($VST_{D1}$) oder zu der Zielvermittlungsstelle ($VST_B$) oder zu dem dem mobilen Zielteilnehmer (B) aktuell zugeteilten Funkkonzentrator ($FUKO_B$) führt, eine Aufbaudatenfolge (D') an die Durchgangsvermittlungsstelle ($VST_{D1}$) oder die Zielvermittlungsstelle ($VST_B$) oder den dem mobilen Zielteilnehmer (B) aktuell zugeteilten Funkkonzentrator ($FUKO_B$) sendet, wobei die Aufbaudatenfolge (D') die Wählinformation (W) in Form einer Zielvermittlungsstellen-Kennung ($KVST_B$) und einer Zielteilnehmer-Kennung (KB), eine Identifikationsinformation (I) in Form der Ursprungsvermittlungsstellen-Kennung ($KVST_A$) und einer Ursprungsteilnehmer-Kennung (KA) und eine die ausgesuchte Kanalgruppe oder das ausgesuchte Leitungsbündel betreffende Leitungsbündel-Kennung ($A-D_1$) enthält, daß, falls das ausgesuchte Leitungsbündel zu der Durchgangsvermittlungsstelle ($VST_{D1}$) führt, diese aufgrund der Zielvermittlungsstellen-Kennung ($KVST_B$) innerhalb der Wählinformation (W) in an sich bekannter Weise eine Leitwegsuche durchführt, bei der ein weiteres Leitungsbündel, über das die erste Durchgangsvermittlungsstelle ($VST_{D1}$) mittelbar über eine weitere Durchgangsvermittlungsstelle ($VST_{D2}$) mit der Zielvermittlungsstelle ($VST_B$) verbindbar ist oder unmittelbar mit dieser verbunden ist und in dem zum Zeitpunkt des Beginns dieser Leitwegsuche Sprachübertragungskapazität frei ist, ausgesucht wird, daß die erste Durchgangsvermittlungsstelle ($VST_{D1}$) über eine freie Leitung des ausgesuchten Leitungsbündels, das zu der weiteren Durchgangsvermittlungsstelle ($VST_{D2}$) oder zu der Zielvermittlungsstelle ($VST_B$) führt, eine weitere Aufbaudatenfolge (D'') an die zweite Durchgangsvermittlungsstelle ($VST_{D2}$) oder die Zielvermittlungsstelle ($VST_B$) sendet, wobei die weitere Aufbaudatenfolge (D'') die Wählinformation (W) in Form der Zielvermittlungsstellen-Kennung ($KVST_B$) und der Zielteilnehmer-Kennung (KB), die Identifikations-Kennung (I) in Form der Ursprungsvermittlungsstellen-Kennung ($KVST_A$) und der Ursprungsteilnehmer-Kennung (KA), die erste Leitungsbündel-Kennung ($A-D_1$) und eine weitere Lei-

0048854
80 P 7158 E

tungsbündel-Kennung ($D_1$-$D_2$ bzw. $D_1$-B) enthält, daß jeweils bei Durchlaufen einer weiteren Durchgangsvermittlungsstelle ($VST_{D3}...VST_{Dn}$) eine weitere Leitwegsuche durchgeführt wird und jeweils die das ausgesuchte Leitungsbündel betreffende Leitungsbündel-Kennung an die jeweils bereits bestehende Aufbaudatenfolge angefügt wird, daß die Zielvermittlungsstelle ($VST_B$) oder der dem mobilen Zielteilnehmer (B) aktuell zugeteilte Funkkonzentrator ($FUKO_B$) die an sie oder ihn gerichtete, von der im Verbindungszug vor ihr oder ihm liegende Durchgangsvermittlungsstelle (z. B. $VST_{D2}$) oder unmittelbar von der Ursprungsvermittlungsstelle ($VST_A$) oder dem dem mobilen Ursprungsteilnehmer (A) aktuell zugeteilten Funkkonzentrator ($FUKO_A$) gesendete Aufbaudatenfolge (z. B. D'') speichert und ein die gesamte Information der bis zum Erreichen der Zielvermittlungsstelle oder des dem mobilen Zielteilnehmer (B) aktuell zugeteilten Funkkonzentrator ($FUKO_B$) entstandenen Aufbaudatenfolge (z. B. D'') enthaltendes Quittungstelegramm an die Ursprungsvermittlungsstelle ($VST_A$) oder den dem mobilen Ursprungsteilnehmer (A) aktuell zugeteilten Funkkonzentrator ($FUKO_A$) zurücksendet, wo diese Information ebenfalls gespeichert wird, und daß die realen Teilverbindungen jeweils ausgelöst werden, nachdem zuvor in jeder betreffenden Durchgangsvermittlungsstelle ($VST_{D1}$, $VST_{D2}$) die jeweils gesendete Aufbaudatenfolge bzw. das Quittungstelegramm gespeichert worden ist.

5. Fernsprech-Mobilfunksystem nach Anspruch 1, d a -
d u r c h  g e k e n n z e i c h n e t , daß die Übertragung von Zielkennungsfolgen (Z) von dem jeweiligen Funkkonzentrator ($FUKO_A$ bzw. $FUKO_B$) über einen speziellen Steuerkanal, der nicht identisch mit einem für Zwecke des Verbindungsaufbaus bzw. für Organisationszwecke für das Fernsprech-Mobilfunksystem vorgesehenen Organisationskanal ist, durchgeführt wird.

6. Fernsprech-Mobilfunksystem nach Anspruch 5, d a - d u r c h  g e k e n n z e i c h n e t , daß der jeweilige Funkkonzentrator (FUKO$_A$ bzw. FUKO$_B$) beim Aufbau einer Verbindung über den Organisationskanal der betreffenden Verbindung eine Nummer zuordnet, die nur für die Dauer der Verbindung und nur für diese und den betreffenden Funkkonzentrator (FUKO$_A$ bzw. FUKO$_B$) gilt.

7. Fernsprech-Mobilfunksystem nach Anspruch 6, d a - d u r c h  g e k e n n z e i c h n e t , daß alle Kanäle des Funkkonzentrators (FUKO$_A$ bzw. FUKO$_B$) numeriert sind und daß mit einem bestimmten Bit einer Kanalnummer gekennzeichnet ist, in welcher Richtung der betreffende Kanal betrieben wird.

8. Fernsprech-Mobilfunksystem nach Anspruch 1, d a - d u r c h  g e k e n n z e i c h n e t , daß jeweils sendeseitig ein der betreffenden Sprechverbindung an geeigneter Stelle fest oder bedarfsweise zugeordneter Sprachdetektor vorgesehen ist, der in der Lage ist, Sprechpausen zu erkennen und daraufhin die Phrasen (P) zu bilden.

9. Fernsprech-Mobilfunksystem nach Anspruch 1 oder 4, d a d u r c h  g e k e n n z e i c h n e t , daß das eine Phrase (P) bildende codierte Sprachsignal auf der jeweils sendenden Seite für eine vorbestimmte Zwischenspeicherzeit von beispielsweise 15 ms zwischengespeichert wird, in welcher Zwischenspeicherzeit die der zu sendenden Phrase (P) voranzustellende Zielkennungsfolge (Z) gebildet und ausgesendet wird.

10. Fernsprech-Mobilfunksystem nach Anspruch 9, d a - d u r c h  g e k e n n z e i c h n e t , daß die Zwi- schenspeicherzeit so groß gewählt ist, daß eine Karenzzeit entsteht, innerhalb derer eine Unterscheidungsmöglichkeit zwischen Sprache einerseits und Knackgeräuschen andererseits gegeben ist.

11. Fernsprech-Mobilfunksystem nach Anspruch 1 oder 4, d a d u r c h   g e k e n n z e i c h n e t ,   daß die Phrasen (P) durch eine geeignete Rasterung in Zeitabschnitten, beispielsweise zu je 8 ms, normiert werden, wobei jede Phrase (P) aus beliebig vielen solcher Zeitabschnitte oder Rasterteilen bestehen kann, und daß diese Rasterteile unmittelbar aneinander gefügt werden.

12. Fernsprech-Mobilfunksystem nach den Ansprüchen 8 und 11, d a d u r c h   g e k e n n z e i c h n e t , daß, nachdem der Sprachdetektor das Ende einer aktuellen Phrase (P) erkannt hat und damit einhergehend die Übertragung dieser Phrase (P) abgeschlossen ist, oktettweise ein Ruhekennzeichen, beispielsweise der Form 11111111, übertragen wird.

13. Fernsprech-Mobilfunksystem nach Anspruch 12, d a - d u r c h   g e k e n n z e i c h n e t ,   daß zumindest zwei Oktetts des Ruhekennzeichens als Endekennung an die betreffende Phrase (P) angefügt werden.

14. Fernsprech-Mobilfunksystem nach Anspruch 12, d a - d u r c h   g e k e n n z e i c h n e t ,   daß jede der sendenden Stellen jeweils nach dem Ende einer Phrase (P) solange das Ruhekennzeichen auf die betreffende Funkverbindung und/oder Leitung gibt, bis eine neue Phrase (P) zu übertragen ist.

15. Fernsprech-Mobilfunksystem nach Anspruch 1 oder 4, d a d u r c h   g e k e n n z e i c h n e t ,   daß der Beginn einer Phrase (P) durch ein Phrasenbeginnzeichen, beispielsweise Oktett der Form 00000000, gekennzeichnet wird und daß der jeweils betreffende Empfänger nach dem Empfang des Phrasenbeginnzeichens das folgende Oktett als Sprache decodiert.

0048854
80 P 7158 E

16. Fernsprech-Mobilfunksystem nach Anspruch 1 oder 4, d a d u r c h   g e k e n n z e i c h n e t , daß für den Fall, daß sichergestellt ist, daß das erste Oktett, das Sprache darstellt, von Oktetts, die besondere Kennzeichen darstellen, verschieden ist, das Phrasenbeginnzeichen eingespart ist.

17. Fernsprech-Mobilfunksystem nach Anspruch 1 oder 4, d a d u r c h   g e k e n n z e i c h n e t , daß die Durchlaufzeit der Sprache durch den jeweils betreffenden Funkkonzentrator (FUKO$_A$ bzw. FUKO$_B$) und/oder eine Vermittlungsstelle in jedem Fall gleich ist.

18. Fernsprech-Mobilfunksystem nach Anspruch 1 oder 4, d a d u r c h   g e k e n n z e i c h n e t , daß jeweils vollständige Rasterteile zu beispielsweise je 8 ms einer aktuellen Phrase (P) unterdrückt werden, wenn keine reale Funkverbindung und/oder Leitung zeitgerecht zur Verfügung steht und daß von dem Zeitpunkt an, zu dem eine reale Funkverbindung und/oder Leitung zur Verfügung steht, der Rest der Phrase (P) zeitrichtig mit Beginn eines neuen Rasterteiles übertragen wird.

19. Fernsprech-Mobilfunksystem nach Anspruch 18, d a - d u r c h   g e k e n n z e i c h n e t , daß jeweils 16 Oktetts einer aktuellen, augenblicklich nicht übertragbaren Phrase (P) zwischengespeichert werden, daß, sobald eine reale Funkverbindung und/oder Leitung zur Verfügung steht, diese 16 Oktetts übertragen werden und daß anschließend an die Übertragung der 16 Oktetts, die zuvor gespeichert wurden, der aktuelle Rest der Phrase (P) zeitrichtig entsprechend dem Zeitraster angefügt und übertragen wird.

20. Fernsprech-Mobilfunksystem nach einem der vorhergehenden Ansprüche, d a d u r c h   g e k e n n z e i c h n e t , daß für eine Phrase (P) mit einer

0048854

überdurchschnittlichen Anzahl von Oktetts in der Zielkennungsfolge (Z) eine Prioritätsangabe vorgesehen ist,
aufgrund derer eine derart gekennzeichnete Phrase (P)
bei dem jeweils aktuellen Aufbau einer realen Verbindung
bevorzugt berücksichtigt wird.

21. Fernsprech-Mobilfunksystem nach Anspruch 4, d a -
d u r c h   g e k e n n z e i c h n e t , daß in dem
Fall, in dem eine Phrase (P) in Richtung von einem mobilen Teilnehmer beendet ist, die Mobilteilnehmerstation
oder der betreffende Funkkonzentrator (z. B. $FUKO_A$) 16
Oktetts der Form 11111111 sendet und anschließend den
benutzten Sprechkanal freigibt.

22. Fernsprech-Mobilfunksystem nach Anspruch 4, d a -
d u r c h   g e k e n n z e i c h n e t , daß die Aufbaudatenfolgen (D', D'') in an sich bekannter Weise,
beispielsweise mit einem Paritätsbit, gesichert sind.

23. Fernsprech-Mobilfunksystem nach Anspruch 4, d a -
d u r c h   g e k e n n z e i c h n e t , daß für den
Fall, daß für eine vom mobilen Teilnehmer zur festen
Station zu übertragenden Phrase kein realer Kanal zeitgerecht zur Verfügung gestellt werden kann oder die feste Station die Anforderung eines Kanals überhört hat
oder die Anforderung durch Anforderungen anderer mobiler
Stationen gestört war, der mobile Teilnehmer nach Ablauf
der Zwischenspeicherzeit von 15 ms erneut einen Kanal
anfordert, jedoch die Aussendung der Anforderung noch um
den Zeitbedarf für die Übertragung von 0, 1, 2 oder 3
Oktetts weiter verzögert und die tatsächliche Verzögerung der Aussendung stochastisch bestimmt.

24. Fernsprech-Mobilfunksystem nach den Ansprüchen 4 und
5, d a d u r c h   g e k e n n z e i c h n e t , daß
für den Fall, daß der Empfänger der mobilen Station an
den Sprechkanal geschaltet ist, während der betreffende

80 P 7158 E    0048854

Funkkonzentrator (z. B. FUKO$_A$) einen Sendekanal der mobilen Station zuteilen sollte, der Funkkonzentrator (FUKO$_A$) den Sprechkanal für eine Zeit von 10 ms unterbricht und in dem Sprechkanal beispielsweise 16 Oktetts der Form 11111111, zwei Oktetts für die Ruhezustandskennung sowie die betreffende Verbindungsnummer und die betreffende Sprechkanalnummer sendet.

25. Fernsprech-Mobilfunksystem nach Anspruch 24, d a - d u r c h   g e k e n n z e i c h n e t , daß für den Fall, daß die betreffende aktuelle Phrase (P) zwischenzeitlich beendet worden ist, diese Phrase (P) - wie an sich üblich - mit 16 Oktetts der Form 11111111 abgeschlossen wird.

26. Fernsprech-Mobilfunksystem nach Anspruch 1, d a - d u r c h   g e k e n n z e i c h n e t , daß zur Überwachung der virtuellen Verbindung (VV$_A$, VV$_B$, VV$_T$) jeweils mit Beginn einer betreffenden neuen Phrase (P) in der betreffenden Vermittlungsstelle ein Zeitglied in seinen Zustand "NULL" gesetzt wird und daß die virtuelle Verbindung automatisch ausgelöst wird, wenn das Zeitglied einen vorbestimmten Grenzwert erreicht.

0048854

1/2

FIG 1

FIG 2

FIG 3

$D'$

I

W

| A–D1 | KA | | KB | |

$KVSt_A$  $KVSt_B$

FIG 4

$D''$

I

W

| D1–B | A–D1 | KA | | KB | |

$KVSt_A$  $KVSt_B$

FIG 5

S

| Z | | | | E | P | Z | | | | E |

(E)   (E)

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | <u>DE - A - 2 659 635</u> (SIEMENS)<br><br>  * Patentanspruch 1; Seite 20,<br>    Zeile 26 - Seite 22, Zeile 14 *<br><br>      -- | 1 |
| A | INTERNATIONAL CONFERENCE ON COMMU-<br>NICATIONS, 8-12 Juni 1980<br>Seattle, US<br>SPILLING et al.: "Digital voice<br>communications in the packet radio<br>network", Seiten 21.4.1 - 21.4.7<br><br>  * Vollständig *<br><br>      -- | 1 |
| A | <u>DE - A - 2 522 758</u> (SIEMENS)<br><br>  * Seite 11, Zeile 21 - Seite 17,<br>    Zeile 22; Figur *<br><br>      -- | 1,4 |
| A | IEEE TRANSACTIONS ON COMMUNICATIONS<br>Band COM-28, Nr. 9, September 1980<br>New York, US<br>MOWAFI et al.: "Integrated Voice/<br>Data Packet Switching Techniques<br>for Future Military Networks",<br>Seiten 1655-1662<br><br>  * Seite 1665, rechte Spalte,<br>    Zeile 5 - Seite 1666, linke<br>    Spalte, Zeile 23 *<br><br>      -- | 1,3,4 |
| A | COLLOQUE INTERNATIONAL DE COMMUTA-<br>TION, Paris, 7-11 Mai 1979<br>Paris, FR<br>IKEDA et al.: "Système de commu-<br>tation de circuits virtuels: un<br>nouveau concept pour les réseaux<br>numériques è services intégrés"<br>Seiten 757-764<br><br>           ./. | 1,3,4,<br>8,18,<br>22 |

**KLASSIFIKATION DER ANMELDUNG (Int. Cl.³)**

H 04 Q 7/04

**RECHERCHIERTE SACHGEBIETE (Int. Cl.³)**

H 04 Q   7/00<br>           7/02<br>           7/04<br>         11/04<br>H 04 L 11/00<br>         11/20

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 04-01-1982 | WANZEELE |

EPA form 1503.1  06.78

Europäisches
Patentamt

**EUROPÄISCHER RECHERCHENBERICHT**

004854

Nummer der Anmeldung

EP 81 10 7142

-2-

| | **EINSCHLÄGIGE DOKUMENTE** | | KLASSIFIKATION DER ANMELDUNG (Int. Cl.³) |
|---|---|---|---|
| Kategorie | Kennzeichnung des Dokuments mit Angabe, soweit erforderlich, der Maßgeblichen Teile | betrifft Anspruch | |
| | * Seite 759, linke Spalte, Zeile 8 - Seite 764, linke Spalte, Zeile 12; Figuren 3, 7,9,12-15 *<br><br>-- | | |
| A | FR - A - 2 362 546 (POST OFFICE)<br><br>* Seite 7, Zeile 15 - Seite 11, Zeile 15; Figur 2 *<br><br>& DE - A - 2 736 858<br><br>-- | 1,4 | |
| A | US - A - 3 749 845 (FRASER)<br><br>* Spalte 5, Zeile 38 - Spalte 7, Zeile 17, Patentansprüche 1,3,4,5,6; Figur 1B *<br><br>& DE - A - 2 241 573<br><br>-- | 1,4 | RECHERCHIERTE SACHGEBIETE (Int. Cl.³) |
| A | DE - A - 2 441 099 (INTERNATIONAL STANDARD ELECTRIC)<br><br>* Seite 5, Zeile 1 - Seite 14, Zeile 15; Seite 89, Zeile 20 - Seite 91, Zeile 7; Figuren 1-3 *<br><br>----- | 1,4 | |